# EUROPEAN PATENT APPLICATION

(11) **EP 4 360 872 A1**
(43) Date of publication of application: **01.05.2024**
(21) Application number: 22828408.9
(22) Date of filing: 21.06.2022
(51) Int. Cl.: B32B 9/00, B32B 27/32, B65D 65/40, C08L 23/04, C09J 7/30

(54) **GAS BARRIER FILM, LAMINATE, AND PACKAGING MATERIAL**

(30) Priority: 21.06.2021 JP 2021102658
(71) Applicant: TOPPAN INC., Tokyo 110-0016 (JP)
(72) Inventor: TAKEI Ryo, Tokyo 110-0016 (JP); YAMADA Mikinori, Tokyo 110-0016 (JP)
(74) Representative: TBK
(86) International application number: PCT/JP2022/024649
(87) International publication number: WO 2022/270491

(57) **Abstract**

A gas barrier film includes a base material containing a polyethylene as a main resin component and an inorganic oxide layer or an oxygen barrier membrane formed on a first surface side of the base material. The probe descent temperature of the base material on the first surface side is 180°C or lower, and the proportion of the polyethylene in the entire gas barrier film is 90 mass% or more.

## Description

### [Technical Field]

The present invention relates to a gas barrier film. A laminate and a packaging material in which this gas barrier film is used will also be mentioned.

Priority is claimed on Japanese Patent Application No. 2021-102658, filed in Japan on June 21, 2021, the content of which is incorporated herein by reference.

### [Background Art]

Packaging materials that are used to package food, medication, and the like are required to have a property of preventing the ingress of gases that modify the contents (water vapor, oxygen, and others), that is, a gas barrier property, to suppress alteration, decomposition, or the like of the contents and maintain the function or quality thereof. Therefore, for these packaging materials, film materials having a gas barrier property (gas barrier films) are used.

As the gas barrier films, films having a gas barrier layer made of a material having a gas barrier property provided on the surface of a resin base material are known. As the gas barrier layer, metal foils, metal-deposited films, and membranes formed by a wet coating method are known. Regarding the membranes, as membranes exhibiting an oxygen barrier property, resin films formed of a coating agent containing a water-soluble polymer or a resin such as polyvinylidene chloride or inorganic layered mineral composite resin films formed of a coating agent containing a water-soluble polymer and an inorganic layered mineral are known (Patent Document 1). Furthermore, as the gas barrier layer, a gas barrier layer in which a deposited thin film layer made of an inorganic oxide and a gas barrier composite coating containing an aqueous polymer, an inorganic layered compound, and a metal alkoxide are sequentially laminated (Patent Document 2) or a gas barrier layer containing a polyvalent metal salt of a carboxylic acid that is a reaction product of a carboxy group of a polycarboxylic acid-based polymer and a polyvalent metal compound (Patent Document 3) have been proposed.

In recent years, there has been a demand for an additional increase in the efficiency of the sorted collection and recycling of plastic materials due to growing environmental awareness arising from a problem of plastic trash in the ocean or the like. Packaging laminates for which attempts have thus far been made to enhance performance by combining a variety of dissimilar materials are also not an exception, and there has been a demand for mono-material packaging.

In order to realize mono-material packaging in laminates, there is a need to use resin materials of the same category for a film configuring each layer. For example, polyethylene, which is a kind of polyolefin, is in wide use as packaging materials, and thus mono-material packaging in laminates for which polyethylene is used is being expected.

In order to realize mono-material packaging, for example, Patent Document 4 proposes a laminate in which a polyethylene-based film including a deposited layer is used for a base material and at least one surface of a heat seal layer and discloses a stretched polyethylene as the base material from the viewpoint of printability and bag making suitability.

### [Citation List]

### [Patent Literature]

[Patent Document 1]
   Japanese Patent No. 6191221
[Patent Document 2]
   Japanese Unexamined Patent Application, First Publication No. 2000-254994
[Patent Document 3]
   Japanese Patent No. 4373797
[Patent Document 4]
   Japanese Unexamined Patent Application, First Publication No. 2020-055157

### [Summary of Invention]

### [Technical Problem]

However, the stretched polyethylene base material, which has been proposed in Patent Document 4, has a problem in that the peel strength of the base material surface layer is weak and the heat seal layer joined thereto through an adhesive layer is likely to peel off. Therefore, the stretched polyethylene base material can be used only for light packaging materials that do not require a strong adhesion strength so much and is not suitable for packaging materials for a boiling treatment and the like, for which sufficient durability is required, in some cases.

The inventors solved this problem while maintaining the configuration of mono-material packaging.

Based on the above-described circumstances, an objective of the present invention is to provide a gas barrier film capable of configuring an easily recyclable laminate in which a base material and a heat seal layer sufficiently adhere to each other.

### [Solution to Problem]

A first aspect of the present invention is a gas barrier film including a base material containing a polyethylene as a main resin component and an inorganic oxide layer of an oxygen barrier membrane formed on a first surface side of the base material.

In this gas barrier film, a probe descent temperature on the first surface side of the base material is 180°C or lower.

The proportion of the polyethylene in the entire gas barrier film is 90 mass% or more.

A second aspect of the present invention is a laminate including the gas barrier film according to the first aspect and a heat seal layer containing a polyethylene as a main resin component and being joined to the gas barrier film such that the inorganic oxide layer or the oxygen barrier membrane is sandwiched between the base material and the heat seal layer.

The proportion of the polyethylene in the entire laminate is 90 mass% or more.

A third aspect of the present invention is a packaging material formed using the laminate according to the second aspect.

### [Advantageous Effects of Invention]

According to the present invention, it is possible to provide a gas barrier film capable of configuring an easily recyclable laminate in which a base material and a heat seal layer sufficiently adhere to each other.

### [Brief Description of Drawings]

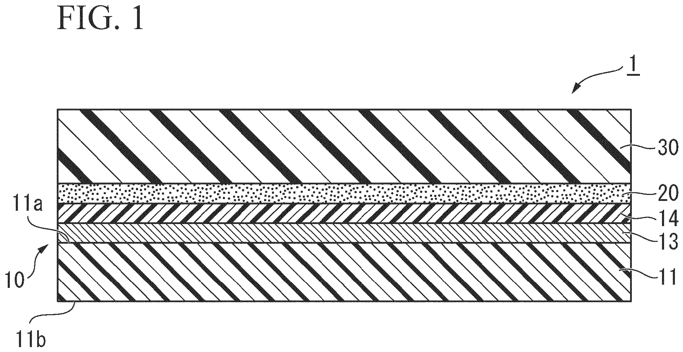

FIG. 1 is a schematic cross-sectional view of a laminate according to one embodiment of the present invention.

### [Description of Embodiments]

Hereinafter, one embodiment of the present invention will be described with reference to FIG. 1.

FIG. 1 is a schematic cross-sectional view of a laminate 1 according to the present embodiment. The laminate 1 includes a gas barrier film 10 and a heat seal layer 30. The gas barrier film 10 of the present embodiment is one aspect of a gas barrier film according to the present invention.

The gas barrier film 10 and the heat seal layer 30 are joined together through an adhesive layer 20.

The proportion of a polyethylene in the laminate 1 is 90 mass% or more. This makes the laminate 1 composed of a highly recyclable mono-material.

The gas barrier film 10 includes a sheet-like base material 11 and an inorganic oxide layer 13 and an oxygen barrier membrane 14 sequentially formed on a first surface 11a of the base material 11.

At least one of the inorganic oxide layer 13 and the oxygen barrier membrane 14 needs to be included, and both may be included as shown in FIG. 1.

The proportion of a polyethylene in the gas barrier film 10 is 90 mass% or more. This makes the gas barrier film 10 be composed of a highly recyclable mono-material.

Hereinafter, each configuration of the gas barrier film 10 will be described.

The base material 11 contains a polyethylene (PE). The base material 11 may contain a polyethylene alone as a resin component. The base material 11 may be any of a single-layer film composed of a single resin of a single-layer or laminate film for which a plurality of resins is used. In addition, PE may be laminated on a different base material (metal, wood, paper, ceramics or the like). That is, the base material 11 may be a single layer or may be two or more layers.

The base material 11 may be any of a single-layer film composed of a single resin or a single-layer or laminate film for which a plurality of resins is used. In addition, a variety of resins described above may be laminated on a different base material (metal, wood, paper, ceramics or the like). That is, the base material 11 may be a single layer or may be two or more layers.

The base material 11 may be an unstretched film or may be a stretched (uniaxially or biaxially stretched) film.

The density of PE in the base material 11 is preferably 0.935 or higher and more preferably 0.940 or higher. When the density of PE is within the above-described range, it is easy to suppress the elongation of the base material 11 during rolling and the consequent formation of wrinkles, and it is easy to suppress the generation of cracks in the inorganic oxide layer 13.

PE may be at least one polymer selected from a homopolymer, a random copolymer and a block copolymer. The homopolymer is a polyethylene made of polyethylene alone. The random copolymer is a polyethylene in which ethylene, which is a main monomer, and a small amount of a comonomer that is different from the ethylene (for example, an α-olefin) randomly copolymerize and form a homogeneous phase. The block copolymer is a polyethylene in which ethylene, which is a main monomer, and the above-described copolymer (for example, an α-olefin) block-copolymerize or polymerize into a rubber form and thereby form a heterogeneous phase.

The base material 11 may be a multilayer configuration including a plurality of layers (films) each containing PE having a different density. It is desirable to configure the base material 11 to include multiple layers as appropriate in consideration of the processability, stiffness or bending stiffness and heat resistance of a film configuring each layer, powder falling during conveyance or the like. The films that configure the base material 11 can be produced by appropriately selecting and using a high-density polyolefin, a medium-density polyolefin, a low-density polyolefin or the like. Even in this case, the density is preferably 0.935 or higher when the density is measured for the entire base material 11.

Each layer of the base material 11 may contain a slip agent, an antistatic agent or the like, and the content or content rate thereof may vary with each layer. The base material 11 including a plurality of layers can be produced by extrusion coating, co-extrusion coating, sheet forming, co-extrusion blow forming or the like.

On the first surface 11a of the base material 11, a surface treatment such as a chemical treatment, a solvent treatment, a corona treatment, a low-temperature plasma treatment or an ozone treatment may be performed to improve the adhesiveness to the inorganic oxide layer 13. Furthermore, the same surface treatment may also be performed on a second surface 11b on the opposite side to the first surface 11a for the purpose of attachment to a printed base material.

An undercoat layer may be provided on the first surface 11a. The undercoat layer is a layer containing an organic polymer as a main component and is referred to as a primer layer in some cases. The undercoat layer provided makes it possible to improve the film formation property or adhesion strength of the inorganic oxide layer 13 of the oxygen barrier membrane 14.

The amount of the organic polymer in the undercoat layer may be, for example, 70 mass% or more and 80 mass% or more. As the organic polymer, a polyacrylic resin, a polyester resin, a polycarbonate resin, a polyurethane resin, a polyamide resin, a polyolefin resin, a polyimide resin, a melamine resin, a phenolic resin and the like are exemplary examples. When the hydrolysis resistance of the adhesion strength between the base material 11 and the inorganic oxide layer 13 is taken into account, the undercoat layer preferably contains, among the above-described organic polymers, at least one of a polyacrylic resin, a polyol-based resin, a polyurethane-based resin, a polyamide-based resin or a reaction product of these organic polymers.

The undercoat layer may contain a silane coupling agent, organic titanate, modified silicone oil or the like.

As the organic polymer that is used in the undercoat layer, an organic polymer having a urethane bond generated by a reaction between a polyol having two or more hydroxyl groups at a polymer end and an isocyanate compound or an organic polymer containing a reaction product of a polyol having two or more hydroxyl groups at a polymer end and an organic silane compound such as a silane coupling agent or a hydrolyzate thereof is more preferable. One of these may be used or both may be used.

As the polyol, for example, at least one selected from an acrylic polyol, a polyvinyl acetal, a polystyrene polyol, a polyurethane polyol and the like is an exemplary example. The acrylic polyol may be an organic polymer that is obtained by polymerizing an acrylic acid derivative monomer or may be an organic polymer that is obtained by copolymerizing an acrylic acid derivative monomer and a different monomer. As the acrylic acid derivative monomer, ethyl methacrylate, hydroxyethyl methacrylate, hydroxypropyl methacrylate, hydroxybutyl methacrylate and the like are exemplary examples. As the monomer that is copolymerized with the acrylic acid derivative monomer, styrene and the like are exemplary examples.

The isocyanate compound has an action of enhancing the adhesion between the base material 11 and the inorganic oxide layer 13 by a urethane bond that is generated by a reaction with the polyol. That is, the isocyanate compound functions as a crosslinking agent or a curing agent. As the isocyanate compound, for example, monomers such as aromatic tolylene diisocyanate (TDI), diphenylmethane diisocyanate (MDI), aliphatic xylene diisocyanate (XDI), hexamethylene diisocyanate (HMDI) and isophorone diisocyanate (IPDI), polymers thereof and derivatives thereof are exemplary examples. The above-described isocyanate compounds may be used singly or two or more isocyanate compounds may be combined.

As the silane coupling agent, for example, vinyltrimethoxysilane, γ-chloropropylmethyldimethoxysilane, γ-chloropropyltrimethoxysilane, glycidoxypropyltrimethoxysilane, γ-methacryloxypropyltrimethoxysilane, γ-methacryloxypropylmethyldimethoxysilane and the like are exemplary examples. The organic silane compound may be a hydrolyzate of one of these silane coupling agents. As the organic silane compound, one of the above-described silane coupling agents and hydrolyzates thereof may be used singly or a combination of two or more may be contained.

The undercoat layer can be formed using a liquid mixture obtained by blending the above-described component with an organic solvent in an arbitrary proportion. The liquid mixture may contain, for example, a curing accelerator such as a tertiary amine, an imidazole derivative, a metal salt compound of a carboxylic acid, a quaternary ammonium salt or a quaternary phosphonium salt; a phenolic, sulfur-based, phosphite-based or other antioxidant; a leveling agent; a flow control agent; a catalyst; a cross-linking reaction accelerator; a filler or the like.

The liquid mixture can be disposed on the base material 11 in layers using a well-known printing method such as an offset printing method, a gravure printing method, or a silk screen printing method or a well-known application method such as roll coating, knife edge coating, or gravure coating. The disposed mixed liquid is heated, for example, to 50°C to 200°C, whereby the undercoat layer can be formed.

The thickness of the undercoat layer is not particularly limited and may be set within a range of, for example, 0.005 to 5 µm. The thickness can be determined as appropriate depending on the use or required characteristics. The thickness of the undercoat layer is preferably within a range of 0.01 to 1 µm and more preferably within a range of 0.01 to 0.5 µm. When the thickness of the undercoat layer is 0.01 µm or more, a sufficient adhesion strength can be obtained between the base material 11 and the inorganic oxide layer 13, and the oxygen barrier property also becomes favorable. When the thickness of the undercoat layer is 1 µm or less, it is easy to form a uniform coated surface, and the dry load or the manufacturing cost can be suppressed.

The base material 11 may contain an additive such as a filler, an anti-blocking agent, an antistatic agent, a plasticizer, a lubricant or an antioxidant. Any one of these additives may be used singly or two or more additives may be jointly used.

The thickness of the base material 11 is not particularly limited and can be determined as appropriate depending on the price or the use in consideration of the suitability as a packaging material of the lamination suitability of other membranes. The thickness of the base material 11 is, practically, preferably within a range of 3 µm to 200 µm, more preferably within a range of 5 µm to 120 µm, still more preferably within a range of 6 µm to 100 µm and particularly preferably within a range of 10 µm to 40 µm.

### (Inorganic oxide layer 13)

As an inorganic oxide that configures the inorganic oxide layer 13, aluminum oxide, silicon oxide, magnesium oxide, titanium oxide, tin oxide, zinc oxide, indium oxide and the like are exemplary examples. Particularly, the inorganic oxide layer 13 may be composed of aluminum oxide or silicon oxide. Aluminum oxide or silicon oxide is preferable since the productivity is excellent, and the heat-resistant of wet and heat-resistant oxygen barrier property and water vapor barrier property are excellent. The inorganic oxide layer 13 may be formed of one inorganic oxide or may be formed of two or more appropriately-selected inorganic oxides.

The thickness of the inorganic oxide layer 13 can be set to 1 nm or more and 200 nm or less. When the thickness is 1 nm or more, an excellent oxygen barrier property and an excellent water vapor barrier property can be obtained. When the thickness is 200 nm or less, the manufacturing cost can be suppressed at a low level, cracks are less likely to be generated due to an external force such as bending of pulling, and the deterioration of the barrier property can be suppressed.

The inorganic oxide layer 13 can be formed by, for example, a well-known film formation method such as a vacuum deposition method, a sputtering method, an ion plating method or a plasma vapor deposition method (CVD).

### (Oxygen barrier membrane 14)

The oxygen barrier membrane 14 may be a well-known membrane that is formed by a wet coating method.

The oxygen barrier membrane 14 can be obtained by forming a coating film made of a coating agent by a wet coating method on the base material 11 or the inorganic oxide layer 13 and drying this coating film. In the present specification, "coating film" means a wet film, and "membrane" means a dry film, respectively.

As the oxygen barrier membrane 14, a membrane containing at least one of a metal alkoxide and a hydrolyzate thereof or a reaction product thereof and a water-soluble polymer (hereinafter, referred to as "organic inorganic composite membrane" in some cases) may be included. Furthermore, at least one of a silane coupling agent and a hydrolyzate thereof is preferably further contained.

As the metal alkoxide and the hydrolyzate thereof in the organic inorganic composite membrane, for example, compounds represented by a general formula M(OR)ₙ such as tetraethoxysilane [Si(OC₂H₅)_{4]} and aluminum triisopropoxide [Al(OC₃H₇)₃] and hydrolyzates thereof are exemplary examples. Only one of these may be contained or two or more may be appropriately combined and contained.

The total amount of at least one of the metal alkoxide and the hydrolyzate thereof or the reaction product thereof in the organic inorganic composite membrane is, for example, within a range of 40 to 70 mass%. From the viewpoint of further reducing the oxygen transmission rate, the lower limit of the total amount may be 50 mass%, and the upper limit of the total amount may be 65 mass%.

The water-soluble polymer in the organic inorganic composite membrane is not particularly limited, and, for example, polysaccharides such as polyvinyl alcohol-based polysaccharides and starch/methylcellulose/carboxymethylcellulose and a variety of polymers such as acrylic polyol-based polymers are exemplary examples. From the viewpoint of further improving the oxygen gas barrier property, a polyvinyl alcohol-based polymer is preferably contained. The number-average molecular weight of the water-soluble polymer is, for example, within a range of 40000 to 180000.

The polyvinyl alcohol-based water-soluble polymer can be obtained by, for example, saponifying (or partially saponifying) polyvinyl acetate. In this water-soluble polymer, several tens of percents of an acetic acid group may remain or only several percents of an acetic acid group may remain.

The amount of the water-soluble polymer in the organic inorganic composite membrane is, for example, within a range of 15 to 50 mass%. When the amount of the water-soluble polymer is within a range of 20 to 45 mass%, the oxygen transmission rate of the organic inorganic composite membrane can be further reduced, which is preferable.

As the silane coupling agent and the hydrolyzate thereof in the organic inorganic composite membrane, silane coupling agents having an organic functional group are exemplary examples. As such a silane coupling agent and such a hydrolyzate thereof, ethyltrimethoxysilane, vinyltrimethoxysilane, γ-chloropropylmethyldimethoxysilane, γ-chloropropyltrimethoxysilane, glycidoxypropyltrimethoxysilane, γ-methacryloxypropyltrimethoxysilane, γ-methacryloxypropylmethyldimethoxysilane and hydrolyzates thereof are exemplary examples. Only one of these may be contained or two or more may be appropriately combined and contained.

As at least one of the silane coupling agent and the hydrolyzate thereof, a silane coupling agent or hydrolyzate thereof having an epoxy group as the organic functional group is preferably used. As the silane coupling agent having an epoxy group, for example, γ-glycidoxypropyltrimethoxysilane and β-(3,4-epoxycyclohexyl)ethyltrimethoxysilane are exemplary examples. The silane coupling agent or hydrolyzate thereof having an epoxy group may also have another organic functional group that is different from the epoxy group such as a vinyl group, an amino group, a methacrylic group or an ureyl group.

The silane coupling agent and hydrolyzate thereof having an organic functional group are capable of further improving the oxygen barrier property of the oxygen barrier membrane 14 and the adhesion to the base material 11 or the inorganic oxide layer 13 by the interaction between the organic functional group and the hydroxyl group of the water-soluble polymer. In particular, the epoxy group of the silane coupling agent or the hydrolyzate thereof and the hydroxyl group of a polyvinyl alcohol are capable of configuring the oxygen barrier membrane 14 being particularly excellent in terms of an oxygen barrier property and adhesion by the interaction.

The total amount of at least one of the silane coupling agent and the hydrolyzate thereof or the reaction product thereof in the organic inorganic composite membrane is, for example, within a range of 1 to 15 mass%. When the total amount of at least one of the silane coupling agent and the hydrolyzate thereof of the reaction product thereof is within a range of 2 to 12 mass%, the oxygen transmission rate of the organic inorganic composite membrane can be further reduced, which is preferable.

The organic inorganic composite membrane may contain a crystalline inorganic layered compound having a layer structure. As the inorganic layered compound, for example, clay minerals represented by the kaolinite group, the smectite group, the mica group or the like are exemplary examples. These can be used singly of two or more can be appropriately combined and used. The particle diameters of the inorganic layered compound are, for example, within a range of 0.1 to 10 µm. The aspect ratios of the inorganic layered compound are, for example, within a range of 50 to 5000.

As the inorganic layered compound, a clay mineral from the smectite group is preferable since a membrane having an excellent oxygen barrier property and an excellent adhesion strength can be formed by the intercalation of the water-soluble polymer between the layers of the layer structure. Specific examples of the clay mineral from the smectite group include montmorillonite, hectorite, saponite, water-swellable synthetic mica and the like. In a case where water-swellable synthetic mica is contained in the oxygen barrier membrane 14, when a hydrothermal treatment such as a boiling treatment is performed on the film, the layer structure of the water-swellable synthetic mica collapses, and, consequently, there are cases where an expected function is not sufficiently exhibited. Therefore, the gas barrier film 10 may be configured not to include the oxygen barrier membrane 14 containing water-swellable synthetic mica.

As another preferable example of the oxygen barrier membrane 14, membranes containing a polyvalent metal salt of a carboxylic acid that is a reaction product of a carboxy group of a carboxylic acid-based polymer (A) and a polyvalent metal compound (B) (polyvalent metal salt membranes of a carboxylic acid) are exemplary examples. In this case, the oxygen barrier membrane 14 may be a polyvalent metal salt membrane of a polycarboxylic acid that is formed by applying, heating and drying a coating agent containing a mixture of the polycarboxylic acid-based polymer (A) and the polyvalent metal compound (B). In addition, the oxygen barrier membrane 14 may be a polyvalent metal salt membrane of a polycarboxylic acid that is formed by forming an "A" membrane by applying and drying a coating agent containing the polycarboxylic acid-based polymer (A) as a main component, then, forming a "B" membrane by applying and drying a coating agent containing the polyvalent metal compound (B) as a main component and causing a crosslinking reaction between the A/B layers.

### [Polycarboxylic acid-based polymer (A)]

The polycarboxylic acid-based polymer is a polymer having two or more carboxy groups in the molecule. As the polycarboxylic acid-based polymer, for example, (co)polymers of an ethylenically unsaturated carboxylic acid; copolymers of an ethylenically unsaturated carboxylic acid and a different ethylenically unsaturated monomer; acidic polysaccharides having a carboxyl group in the molecule such as alginic acid, carboxymethylcellulose and pectin are exemplary examples.

As the ethylenically unsaturated carboxylic acid, for example, acrylic acid, methacrylic acid, itaconic acid, maleic acid, fumaric acid, crotonic acid and the like are exemplary examples.

As the ethylenically unsaturated monomer that can be copolymerized with the ethylenically unsaturated carboxylic acid, for example, saturated carboxylic acid vinyl esters such as ethylene, propylene and vinyl acetate, alkyl acrylates, alkyl methacrylates, alkyl itaconates, vinyl chloride, vinylidene chloride, styrene, acrylamide, acrylonitrile and the like are exemplary examples.

These polycarboxylic acid-based polymers may be used singly of two or more may be mixed and used.

As a component, among what has been described above, from the viewpoint of the gas barrier property of a gas barrier film to be obtained, a polymer having a configuration unit derived from at least one polymerizable monomer selected from the group consisting of acrylic acid, maleic acid, methacrylic acid, itaconic acid, fumaric acid and crotonic acid is preferable, and a polymer having a configuration unit derived from at least one polymerizable monomer selected from the group consisting of acrylic acid, maleic acid, methacrylic acid and itaconic acid is particularly preferable.

In this polymer, the proportion of the configuration unit derived from at least one polymerizable monomer selected from the group consisting of acrylic acid, maleic acid, methacrylic acid and itaconic acid is preferably 80 mol% or more and more preferably 90 mol% or more. Here, the total of all configuration units that configure the polymer is set to 100 mol%.

The polymer may be a homopolymer or a copolymer.

In a case where the polymer is a copolymer including a different configuration unit other than the above-described configuration unit, as the different configuration unit, for example, configuration units derived from the above-described ethylenically unsaturated monomer that can be copolymerized with the ethylenically unsaturated carboxylic acid are exemplary examples.

The number-average molecular weight of the carboxylic acid-based polymer is preferably within a range of 2,000 to 10,000,000 and more preferably with a range of 5,000 to 1,000,000. When the number-average molecular weight is less than 2,000, a gas barrier film to be obtained is not capable of achieving sufficient water resistance, and there are cases where the gas barrier property or the transparency is degraded due to moisture or cases where the occurrence of whitening is caused. On the other hand, when the number-average molecular weight exceeds 10,000,000, the viscosity of the coating agent at the time of forming the oxygen barrier membrane becomes high, and there are cases where the coatability is impaired.

The number-average molecular weight is a polystyrene-equivalent number-average molecular weight obtained by gel permeation chromatography (GPC).

In a case where the "A" membrane is formed by applying and drying the coating agent containing the carboxylic acid-based polymer (A) as a main component and then the "B" membrane is formed, some of the carboxy groups may be neutralized with a basic compound in advance in the carboxylic acid-based polymer. Neutralizing some of the carboxy groups in the carboxylic acid-based polymer in advance makes it possible to further improve the water resistance or heat resistance of the "A" membrane.

As the basic compound, at least one basic compound selected from the group consisting of a polyvalent metal compound, a monovalent metal compound and ammonia is preferable.

As the polyvalent metal compound, it is possible to use compounds to be exemplified in the description of the polyvalent metal compound (B), which will be described below. As the monovalent metal compound, for example, sodium hydroxide, potassium hydroxide and the like are exemplary examples.

To the coating agent containing the carboxylic acid-based polymer (A) as a main component, a variety of additives can be added, and a cross-linking agent, a curing agent, a leveling agent, an anti-foaming agent, an anti-blocking agent, an antistatic agent, a dispersant, a surfactant, a softener, a stabilizer, a film-forming agent, a thickener or the like may be added to an extent that the barrier performance is not impaired.

A solvent that is used in the coating agent containing the carboxylic acid-based polymer (A) as a main component is preferably an aqueous medium. As the aqueous medium, water, water-soluble or hydrophilic organic solvents and mixtures thereof are exemplary examples. The aqueous medium is normally water or contains water as a main component.

The amount of water in the aqueous medium is preferably 70 mass% or more and more preferably 80 mas% or more. As the water-soluble or hydrophilic organic solvents, for example, alcohols such as methanol, ethanol and isopropanol, ketones such as acetone and methyl ethyl ketone, ethers such as tetrahydrofuran, cellosolves, carbitols, nitriles such as acetonitriles and the like are exemplary examples.

### [Polyvalent metal compound (B)]

The polyvalent metal compound is not particularly limited as long as the polyvalent metal compound is a compound that reacts with a carboxyl group of a polycarboxylic acid-based polymer to form a polyvalent metal salt of a polycarboxylic acid, and examples thereof include zinc oxide particles, magnesium oxide particles, magnesium methoxide, copper oxide, calcium carbonate and the like. These may be used singly or a plurality may be mixed and used. Zinc oxide is preferable from the viewpoint of the oxygen barrier property of the oxygen barrier membrane.

Zinc oxide is an inorganic material having an ultraviolet absorption capability, and the average particle diameter of the zinc oxide particles is not particularly limited, but the average particle diameter is preferably 5 µm or less, more preferably 1 µm or less and particularly preferably 0.1 µm or less from the viewpoint of the gas barrier property, the transparency and the coating suitability.

In a case where the "B" membrane is formed by applying and drying the coating agent containing the polyvalent metal compound (B) as a main component, the coating agent may contain, aside from the zinc oxide particles, a variety of additives as necessary to an extent that the effect of the present invention is not impaired. As the additives, a resin that is soluble or dispersible in a solvent that is used in the coating agent, a dispersant that is soluble or dispersible in the solvent, a surfactant, a softener, a stabilizer, a film-forming agent, a thickener or the like may be contained.

Among the above-described additives, the coating agent containing the polyvalent metal compound (B) as a main component preferably contains the resin that is soluble or dispersible in the solvent that is used in the coating agent. This improves the coatability and film-forming property of the coating agent. As such a resin, an alkyd resin, a melamine resin, an acrylic resin, a urethane resin, a polyester resin, a phenolic resin, an amino resin, a fluororesin, an epoxy resin, an isocyanate resin and the like are exemplary examples.

In addition, the coating agent containing the polyvalent metal compound (B) as a main component preferably contains a dispersant that is soluble or dispersible in the solvent that is used in the coating agent. This improves the dispersibility of the polyvalent metal compound. As the dispersant, it is possible to use an anionic surfactant or a nonionic surfactant. As the surfactant, (poly)carboxylates, a variety of surfactants such as alkyl sulfate ester salts, alkylbenzenesulfonates, alkylnaphthalenesulfonates, alkylsulfosuccinates, alkyldiphenylether disulfonates, alkyl phosphates, aromatic phosphates, polyoxyethylene alkyl ethers, polyoxyethylene alkylphenol ethers, polyoxyethylene alkyl esters, alkylallyl sulfate ester salts, polyoxyethylene alkyl phosphates, sorbitan alkyl esters, glycerin fatty acid esters, sorbitan fatty acid esters, sucrose fatty acid esters, polyethylene glycol fatty acid esters, polyoxyethylene sorbitan alkyl esters, polyoxyethylene alkylallyl ethers, polyoxyethylene derivatives, polyoxyethylene sorbitol fatty acid esters, polyoxy fatty acid esters and polyoxyethylene alkylamine are exemplary examples. These surfactants may be used singly or two or more may be mixed and used.

In a case where the additives are contained in the coating agent containing the polyvalent metal compound (B) as a main component, the mass ratio (polyvalent metal compound:additives) between the polyvalent metal compound and the additives is preferably within a range of 30:70 to 99:1 and preferably within a range of 50:50 to 98:2.

As a solvent that is used in the coating agent containing the polyvalent metal compound (B) as a main component, for example, water, methyl alcohol, ethyl alcohol, isopropyl alcohol, n-propyl alcohol, n-butyl alcohol, n-pentyl alcohol, dimethylsulfoxide, dimethylformamide, dimethylacetamide, toluene, hexane, heptane, cyclohexane, acetone, methyl ethyl ketone, diethyl ether, dioxane, tetrahydrofuran, ethyl acetate and butyl acetate are exemplary examples. In addition, these solvents may be used singly or two or more may be mixed and used.

Among these, methyl alcohol, ethyl alcohol, isopropyl alcohol, toluene, ethyl acetate, methyl ethyl ketone and water are preferable from the viewpoint of the coatability. In addition, methyl alcohol, ethyl alcohol, isopropyl alcohol and water are preferable from the viewpoint of the manufacturability.

In the case of forming a polyvalent metal salt membrane of a carboxylic acid by applying and drying a coating agent in which the carboxylic acid-based polymer (A) and the polyvalent metal compound (B) has been mixed together, the coating agent is produced by mixing the carboxylic acid-based polymer (A), the polyvalent metal compound (B), water or an alcohol as a solvent, a resin or dispersant that is soluble or dispersible in the solvent and additives as necessary. The polyvalent metal salt membrane of a carboxylic acid can be formed by applying and drying the coating agent by a well-known coating method. As the coating method, for example, a casting method, a dipping method, a roll coating method, a gravure coating method, a screen printing method, a reverse coating method, a spray coating method, a kit coating method, a die coating method, a metering bar coating method, a chamber doctor combined coating method, a curtain coating method and the like are exemplary examples.

The thickness of the oxygen barrier membrane 14 is set depending on a required oxygen barrier property, can be set, for example, within a range of 0.05 to 5 µm and is preferably within a range of 0.05 to 1 µm and more preferably within a range of 0.1 to 0.5 µm. When the thickness of the oxygen barrier membrane 14 is 0.05 µm or more, it is easy to obtain a sufficient oxygen barrier property. When the thickness of the oxygen barrier membrane 14 is 1 µm of less, it is easy to form a uniform coated surface, and the dry load or the manufacturing cost can be suppressed.

The oxygen barrier membrane 14 made of the organic inorganic composite membrane or the polyvalent metal salt membrane of a carboxylic acid exhibits an excellent oxygen barrier property even after a boiling treatment or a retort sterilization treatment. The laminate 1 having a sealant film joined to the gas barrier film 10 has a sufficient adhesion strength or seal strength as a packaging material for a boiling of retort treatment and, furthermore, has both transparency and bending resistance or stretching resistance that metal foils or metal-deposited films do not have. Furthermore, the laminate has an advantage of no risk of the generation of a hazardous substance such as dioxin.

### (Adhesive layer 20)

A well-known adhesive for dry lamination may be used as the adhesive layer 20. Adhesives can be used with no particular limitations as long as the adhesives are for dry lamination, and specific examples include two-liquid curable ester-based adhesives, ether-based adhesives, urethane-based adhesives and the like.

A gas barrier adhesive that exhibits a gas barrier property after curing may also be used as the adhesive layer 20. The use of the gas barrier adhesive makes it possible to improve the gas barrier property of the laminate 1. The oxygen transmission rate of the gas barrier adhesive is preferably 150 cc/m²·day·atm or less, more preferably 100 cc/m²·day·atm or less, still more preferably 80 cc/m²·day·atm or less and particularly preferably 50 cc/m²·day·atm or less. When the oxygen transmission rate is within the above-described range, it is possible to sufficiently improve the gas barrier property of the laminate 1, and, even when minor cracks or the like are generated in the inorganic oxide layer 13 or the oxygen barrier membrane 14, the gas barrier adhesive enters gaps therebetween, which makes it possible to suppress the degradation of the gas barrier property.

As the gas barrier adhesive, an epoxy-based adhesive, a polyester/polyurethane-based adhesive and the like are exemplary examples. Specific examples of the gas barrier adhesive include "MAXIVE" manufactured by Mitsubishi Gas Chemical Company, Inc., "Paslim" manufactured by DIC Corporation and the like.

In a case where the adhesive layer 20 is made of the gas barrier adhesive, the thickness of the adhesive layer 20 is preferably 50 times or more the thickness of the inorganic oxide layer 13. When the thickness is within the above-described range, it is possible to more sufficiently suppress the cracking of the inorganic oxide layer 13 and to further improve the gas barrier property of the laminate 1. Furthermore, it is possible to impart a cushioning property, which relaxes external impacts, to the adhesive layer 20 and to prevent the cracking of the inorganic oxide layer 13 attributed to the impacts. The thickness of the adhesive layer 20 is preferably 300 times or less the thickness of the inorganic oxide layer 13 from the viewpoint of the maintaining of the flexibility, processability and cost of the laminate 1.

When indicated by a numerical value, such a thickness of the adhesive layer 20 is, for example, within a range of 0.1 to 20 µm, preferably within a range of 0.5 to 10 µm and more preferably within a range of 1 to 5 µm.

The adhesive forming the adhesive layer 20 can be applied by, for example, a bar coating method, a dipping method, a roll coating method, a gravure coating method, a reverse coating method, an air knife coating method, a comma coating method, a die coating method, a screen printing method, a spray coating method, a gravure offset method or the like. The temperature at the time of drying the coating film of the adhesive can be set, for example, within a range of 30°C to 200°C and is preferably within a range of 50°C to 180°C. The temperature at the time of curing the coating film can be set, for example, within a range of room temperature to 70°C and is preferably within a range of 30°C to 60°C. When the temperatures during the drying and the curing are set within the above-described ranges, it is possible to further suppress the generation of cracks in the inorganic oxide layer 13 or the adhesive layer 20 and to develop an excellent gas barrier property.

From the viewpoint of preventing the cracking of the inorganic oxide layer 13, the adhesive layer 20 and the inorganic oxide layer 13 are preferably in direct contact with each other, but there may be another layer between the adhesive layer 20 and the inorganic oxide layer 13.

### (Heat seal layer 30)

The heat seal layer 30 is a layer containing a polyolefin and functions as a sealant at the time of manufacturing packaging bags or the like using the laminate 1. A polyolefin film may be used as the heat seal layer 30. The use of a polyethylene film as the heat seal layer 30 makes it possible to make the laminate 1 into a mono-material. The heat seal layer 30 may contain only a polyethylene as a resin component.

As a polyolefin-based resin that is used for the heat seal layer 30, it is possible to use ethylene-based resins such as a low-density polyethylene resin (LDPE), a medium-density polyethylene resin (MDPE), a linear low-density polyethylene resin (LLDPE), an ethylene-vinyl acetate copolymer (EVA), an ethylene-α-olefin copolymer and an ethylene-(meth)acrylic acid copolymer, polypropylene-based resins such as a blended resin of polyethylene and polybutene, a homopolypropylene resin (PP), a propylene-ethylene random copolymer, a propylene-ethylene block copolymer and a propylene-α-olefin copolymer and the like. These thermoplastic resins can be selected as appropriate depending on the intended use or the temperature condition of a boiling treatment of the like.

To the heat seal layer 30, a variety of additives such as a flame retardant, a slip agent, an anti-blocking agent, an antioxidant, a light stabilizer and a tackifier may be added.

The thickness of the heat seal layer 30 can be set as appropriate in consideration of the shape of a packaging bag to be manufactured, the mass of contents to be accommodated or the like and may be set, for example, within a range of 30 to 150 µm.

In the case of manufacturing the laminate 1 including the adhesive layer 20 and the heat seal layer 30 using a polyolefin film, it is possible to apply any of a dry lamination method in which the heat seal layer is attached with an adhesive such as a one-liquid curable or two-liquid curable urethane-based adhesive and a non solvent dry lamination method in which the heat seal layer is attached using a solventless adhesive. As another method, it is also possible to form the heat seal layer 30 by an extrusion lamination method in which a thermoplastic resin is heated, melted, extruded in a curtain shape and attached or the like. In this case, the adhesive layer 20 may be omitted.

What has been described above is the basic configuration of the laminate 1. In the laminate 1, the inorganic oxide layer 13 or the oxygen barrier membrane 14 is disposed between the base material 11 and the heat seal layer 30.

The gas barrier film 10 alone can be used for a variety of packaging bags requiring a gas barrier property; however, when one or a plurality of laminates each having the heat seal layer 30 provided on the gas barrier film 10 is prepared, and the fringes are thermally fused together with the heat seal layers 30 facing each other, it is possible to form a variety of packaging materials such as packaging bags and standing bags for which the laminate 1 is used.

As a result of a variety of studies regarding polyethylene base materials having favorable adhesion to the heat seal layer 30, the inventors found that polyethylene base materials having favorable adhesion can be identified from probe descent temperatures.

The probe descent temperature is a parameter relating to the local thermal analysis of a material using a probe and is obtained by measuring the ascent/descent behaviors of the probe. For the measurement of the probe descent temperature, an atomic force microscope (AFM) including a cantilever (probe) having a heating mechanism and a nano-thermal microscope is used. As a sample is heated by bringing the cantilever into contact with the solid-state sample surface fixed to a sample table and applying a voltage to the cantilever in a contact mode, the sample surface thermally expands, and the cantilever ascends. Furthermore, when the cantilever is heated, the sample surface softens, and the hardness significantly changes. As a result, the cantilever descends and even penetrates into the sample surface. The start point of an abrupt displacement detected at this time is the probe descent start point, and the probe descent temperature can be obtained by converting the voltage to a temperature. Such a method makes it possible to learn the local probe descent temperature near the surface of a nanoscale region.

As AFMs that can be used, MPF-3D-SA and Ztherm system manufactured by Oxford Instruments, Nano Thermal Analysis series and nanoIR series manufactured by Bruker and the like are exemplary examples. The probe descent temperature can also be measured with an AFM of a different maker as long as Nano Thermal Analysis can be mounted.

As the cantilever, AN2-200 manufactured by ANSYS, Inc. are exemplary examples. Other cantilevers can also be used as long as it is possible to sufficiently reflect laser beams and to apply voltages.

In the measurement of the probe descent temperature, the temperature range varies with the material of a measurement object, but the measurement can start, for example, from room temperature of approximately 25°C and end at approximately 400°C. Regarding the base material 11 of the present embodiment, the probe descent temperature can be measured in a range of 25°C or higher and 300°C or lower.

The spring constant of the cantilever is preferably within a range of 0.1 to 3.5 N/m, and a cantilever having a spring constant within a range of 0.5 to 3.5 N/m is preferably used to measure the probe descent temperature in both the tapping mode and the contact mode.

In AFMs, the deflection of the cantilever is often detected in the unit of voltage, and, in the contact mode, the deflection of the cantilever changes before and after the contact with the sample. When the amount of this change is within 0.1 to 3.0 V, it is possible to suppress the breakage of the sample surface while the cantilever is brought into contact with the sample.

The temperature rising rate of the cantilever varies with the heating mechanism or the like, can be set to 0.1 V/second or faster and 10 V/second or slower and is preferably 0.2 V/second or faster and 5 V/second or slower.

When the sample surface softens, the tip end portion of the cantilever penetrates the sample and descends. The penetration amount of the cantilever is affected by the detection sensitivity of the peak top of the softening curve and can be set within a range of 3 to 500 nm. When the penetration amount is set within a range of 5 to 100 nm, the breakage of the cantilever can be prevented, which is more preferable.

In order to calculate the probe descent temperature, there is a need to prepare a calibration curve. In examples to be described below, calibration curves were prepared using four resins of polycaprolactone, low-density polyethylene, polypropylene and polyethylene terephthalate as samples for calibration. The details of how to prepare the calibration curve will be described below.

The materials of the samples for calibration are not limited to the above-described materials, at least one sample made of a material having a melting point of near 60°C, at least one sample made of a material having a melting point of near 250°C and at least one sample made of a material having a melting point between near 60°C and near 250°C, for which the thermal conductivities are not significantly different from those of ordinary polymers, need to be used. For example, three of the above-described materials excluding polypropylene out of the above-described four materials may be used as the materials of the samples for calibration.

In the inventors' studies, it was found that, when the probe descent temperature is 180°C or lower, the adhesion strength between the base material 11 and the heat seal layer 30 can be sufficiently ensured, and, when the probe descent temperature reaches 165°C or lower, the effect becomes even stronger.

In the present specification, "the adhesion strength is sufficient" means that the lamination strength between the base material 11 and the heat seal layer 30 measured according to JIS K 6854 is 2 N or higher. In the laminate 1 according to the present embodiment, the adhesion strength between the base material 11 and the heat seal layer 30 has been sufficiently ensured, which will be described using examples below.

The probe descent temperature does not exhibit any certain relationship with a melting point or a glass transition temperatures, which is an ordinary parameter relating to the softening of resins. The probe descent temperature exhibits a certain correlation with the degree of molecular orientation of a resin film and exhibits a tendency of the value becoming small in unstretched films. However, in the inventors' studies, an extremely small number of biaxially stretched films had a probe descent temperature in the above-described numerical value range and exhibited a sufficient adhesion strength to the heat seal layer. That is, the probe descent temperature is a parameter independent of whether a resin film is stretched or unstretched, which is an ordinary differentiation, and the relationship of the adhesion strength between the base material 11 and the heat seal layer 30 using the probe descent temperature as a parameter was found by the inventors for the first time.

In a case where the base material is made of a plurality of layers of different materials, the probe descent temperature of a layer configuring the first surface needs to be 180°C or lower.

An example of the manufacturing sequence of the gas barrier film 10 and the laminate 1 will be described.

First, the base material 11 having a probe descent temperature of 180°C or lower is selected. The base material 11 may be a commercially available product or may be manufactured by a well-known method.

The base material 11 may be a plurality of resin films attached together. In this case, a layer to be described below is formed with a surface made of the resin film having a probe descent temperature of 180°C or lower as a first surface.

Next, an undercoat layer (as necessary) and one or both of the inorganic oxide layer 13 and the oxygen barrier membrane 14 are formed on the base material 11.

In a case where the undercoat layer is formed, the undercoat layer may be formed by, for example, applying a liquid mixture for forming the undercoat layer to the first surface 11a to form a coating film and drying the coating film (removing a solvent).

As a method for applying the liquid mixture, a well-known wet coating method can be used. As the wet coating method, a roll coating method, a gravure coating method, a reverse coating method, a die coating method, a screen printing method, a spray coating method and the like are exemplary examples.

As a method for drying the coating film made of the liquid mixture, well-known drying methods such as hot air drying, hot roll drying and infrared irradiation can be used. The drying temperature of the coating film can be set, for example, within a range of 50°C to 200°C. The drying time varies with the thickness of the coating film, the drying temperature or the like and can be set to, for example, one second to five minutes.

The inorganic oxide layer 13 can be formed by the above-described vacuum deposition method, sputtering method, ion plating method or plasma vapor deposition method (CVD).

The oxygen barrier membrane 14 can be formed by, for example, applying a liquid mixture for forming the oxygen barrier membrane 14 to form a coating film and drying the coating film.

As a method for applying the liquid mixture and a method for drying the liquid mixture, it is possible to use the same methods as the methods exemplified in the description of the step of forming the undercoat layer 12.

The oxygen barrier membrane 14 may be formed by application and drying once or may be formed by repeating the application and drying of a homogeneous liquid mixture or a heterogeneous liquid mixture a plurality of times.

In the laminate 1, a printed layer, a protective layer, a light-shielding layer, other functional layers and the like may be further provided as necessary.

The printed layer can be provided at a position where the printed layer is visible from outside in a laminate or packaging material state for the purpose of displaying information regarding contents, identifying the contents or improving the design of packaging bags. A printing method and a printing ink are not particularly limited and can be selected from well-known printing methods and printing inks as appropriate in consideration of printability to films, designability such as color tone, adhesion, safety as food containers of the like.

As the printing method, for example, a gravure printing method, an offset printing method, a gravure offset printing method, a flexographic printing method, an inkjet printing method and the like are exemplary examples. Among these, the gravure printing method is preferable from the viewpoint of the productivity or high definition of patterns. In order to enhance the adhesion of the printed layer, a variety of pretreatments such as a corona treatment, a plasma treatment and a frame treatment may be performed or a coating layer such as an easy adhesive layer may be provided on the surface of a layer on which the printed layer is to be formed.

The printed layer can be provided between the inorganic oxide layer and the adhesive layer, between the oxygen barrier membrane and the adhesive layer or the like. Furthermore, as described below, in a case where the base material is configured as a plurality of layers, the printed layer may be provided in the base material.

The gas barrier film of the present embodiment will be further described using examples and comparative examples. The present invention is not limited by the specific contents of the examples and the comparative examples.

Resin films used as base materials of the examples and the comparative examples will be described.
α1: Unstretched polyethylene film (HD manufactured by Tamapoly Co., Ltd., thickness: 40 µm, density: 0.949 g/cm³, corona treatment on a single surface)
α2: Unstretched polyethylene film (HS31 manufactured by Tamapoly Co., Ltd., thickness: 30 µm, density: 0.947 g/cm³, corona treatment on a single surface)
α3: Unstretched polyethylene film (GAP manufactured by Charter NEX Films, Inc., thickness: 25 µm, density: 0.950 g/cm³, corona treatment on a single surface)
α4: Unstretched polyethylene film (manufactured by WINPAK Limited, thickness: 25 µm, density: 0.952 g/cm³, corona treatment on a single surface)
α5: Unstretched polyethylene film (manufactured by PolyExpert, Inc., thickness: 25 µm, density: 0.948 g/cm³, corona treatment on a single surface)
α6: Uniaxially stretched polyethylene film (SMUQ manufactured by Tokyo Printing Ink Mfg. Co., Ltd., thickness: 25 µm, density: 0.950 g/cm³, corona treatment on a single surface)
α7: Uniaxially stretched polyethylene film (PE3K-H manufactured by Futamura Chemical Co., Ltd., thickness: 25 µm, density: 0.950 g/cm³, corona treatment on a single surface)
α8: Uniaxially stretched polyethylene film (PE3M manufactured by Futamura Chemical Co., Ltd., thickness: 25 µm, density: 0.950 g/cm³, corona treatment on a single surface)
α9: Biaxially stretched polyethylene film (HD200 manufactured by Jindal Films, Inc., thickness: 25 µm, density: 0.950 g/cm³, corona treatment on a single surface)

Liquid mixtures used to form layers are as described below.

### (Liquid mixture for undercoat layer)

ACRYDIC CL-1000 manufactured by DIC Corporation as an acrylic polyol and a TDI-type curing agent CORONATE 2030 manufactured by Tosoh Corporation as an isocyanate-based compound were used and blended so that the solid content weight ratio between the acrylic polyol and the isocyanate-based compound reached 6:4 and diluted to a solid content of 2 mass% by adding ethyl acetate thereto.

A liquid mixture for an undercoat layer was obtained as described above.

### (Liquid mixture for organic inorganic composite membrane)

An aqueous solution obtained by dissolving a polyvinyl alcohol (PVA) resin (POVAL PVA-105 manufactured by Kuraray Co., Ltd., degree of saponification: 98% to 99%, degree of polymerization: 500) and aqueous solutions obtained by hydrolyzing each of tetraethoxysilane (TEOS) and γ-glycidyloxypropyltrimethoxysilane (GPTMS KBM-403 manufactured by Shin-Etsu Chemical Co., Ltd.) with 0.02 mol/L of hydrochloric acid were prepared, and the three aqueous solutions were mixed so that the weight ratio (PVA:TEOS:GPTMS) before hydrolysis reached 40:50:10. Furthermore, the solution mixture was diluted with a solvent so that the mass ratio between water and isopropyl alcohol in the solvent components of the mixed aqueous solutions reached 90:10.

As a result, a liquid mixture for forming an organic inorganic composite membrane (5 mass%) was obtained.

### (Liquid mixture for "A" membrane)

Twenty parts by mass of a polyacrylic acid aqueous solution having a number-average molecular weight of 200,000 (ARON A-10H manufactured by Toagosei Co., Ltd., solid content concentration: 25 mass%) was diluted by adding 58.9 parts by mass of distilled water thereto. After that, 0.44 parts by mass of aminopropyltrimethoxysilane (APTMS manufactured by Sigma-Aldrich Co. LLC.) was added thereto and stirred, thereby producing a homogeneous solution.

As a result, a liquid mixture for an "A" membrane containing a carboxylic acid-based polymer as a main component was obtained.

### (Liquid mixture for "B" membrane)

One hundred parts by mass of a water dispersion liquid of zinc oxide fine particles (ZE143 manufactured by Sumitomo Osaka Cement Co., Ltd.) and 2 parts by mass of a curing agent (Liofol HAERTER UR 5889-21 manufactured by Henkel AG & Co. KGaA) were mixed together, thereby obtaining a liquid mixture for a "B" membrane containing a polyvalent metal compound as a main component.

Two kinds of adhesives used in adhesive layers will be described below.

### (Urethane-based adhesive)

Adhesive obtained by mixing 11 parts by mass of TAKANATE A52 manufactured by Mitsui Chemicals, Inc. and 84 parts by mass of ethyl acetate with 100 parts by mass of TAKELAC A525 manufactured by Mitsui Chemicals, Inc.

### (Gas barrier adhesive)

Adhesive obtained by mixing 16 parts by mass of MAXIVE C93T manufactured by Mitsubishi Gas Chemical Company, Inc. and 5 parts by mass of MAXIVE M-100 manufactured by Mitsubishi Gas Chemical Company, Inc. with 23 parts by mass of a solvent obtained by mixing ethyl acetate and methanol in a mass ratio of 1:1.

Materials of each configuration used in the examples and the comparative examples are shown in Table 1.

### (Examples 1 to 5, 11 and 12 and Comparative Examples 1 to 4)

The liquid mixture for an undercoat layer was applied using a gravure printer to the corona-treated surface of any of the resin films α1 to α9 to form a coating film, and the coating film was passed through an oven at 60°C for 10 seconds to be dried, thereby forming an undercoat layer having a thickness of 0.1 µm.

Next, a 30 nm-thick inorganic oxide layer made of silicon oxide was formed on the undercoat layer using a vacuum deposition device by an electron beam heating method and a material mixture containing two or more of metallic silicon, silicon monoxide and silicon dioxide.

The liquid mixture for an organic inorganic composite membrane was applied using the gravure printer onto the inorganic oxide layer to form a coating film, and the coating film was passed through an oven at 60°C for 10 seconds to be dried, thereby forming an oxygen barrier membrane made of the organic inorganic composite membrane having a thickness of 0.3 µm and obtaining a gas barrier film according to each of Examples 1 to 5, 11 and 12 and Comparative Examples 1 to 4.

A resin film used in each example is shown in Table 1.

### (Example 6)

A gas barrier film according to Example 6 was obtained by the same procedure as in Example 3 except that the undercoat layer was not provided.

### (Examples 7 to 9 and Comparative Examples 5 and 6)

The liquid mixture for an undercoat layer was applied using a gravure printer to the corona-treated surface of any of the resin films α1 to α9 to form a coating film, and the coating film was passed through an oven at 60°C for 10 seconds to be dried, thereby forming an undercoat layer having a thickness of 0.1 µm.

Next, deposition was performed under the introduction of an oxygen gas using a vacuum deposition device by an electron beam heating method and metallic aluminum, and a 20 nm-thick inorganic oxide layer made of aluminum oxide was formed on the undercoat layer.

The liquid mixture for an "A" membrane was applied using a gravure printer onto the inorganic oxide layer to form a coating film, and the coating film was passed through an oven at 60°C for 10 seconds to be dried, thereby forming an "A" membrane having a thickness of 0.2 µm. Furthermore, the liquid mixture for a "B" membrane was applied using a gravure printer to form a coating film, and the coating film was passed through an oven at 60°C for 10 seconds to be dried, thereby forming a "B" membrane having a thickness of 0.2 µm. As a result, an oxygen barrier membrane made of a polyvalent metal salt membrane of a carboxylic acid was formed, and a gas barrier film according to each of Examples 7 to 9 and Comparative Examples 5 and 6 was obtained.

A resin film used in each example is shown in Table 1.

### (Example 10)

The liquid mixture for an undercoat layer was applied using a gravure printer to the corona-treated surface of the resin films α4 form a coating film, and the coating film was passed through an oven at 60°C for 10 seconds to be dried, thereby forming an undercoat layer having a thickness of 0.1 µm.

Next, the liquid mixture for an "A" membrane was applied using a gravure printer to form a coating film, and the coating film was passed through an oven at 60°C for 10 seconds to be dried, thereby forming an "A" membrane having a thickness of 0.2 µm. Furthermore, the liquid mixture for a "B" membrane was applied using a gravure printer to form a coating film, and the coating film was passed through an oven at 60°C for 10 seconds to be dried, thereby forming a "B" membrane having a thickness of 0.2 µm. As a result, an oxygen barrier membrane made of a polyvalent metal salt membrane of a carboxylic acid was formed, and a gas barrier film according to Example 10 was obtained.

Example 10 does not include any inorganic oxide layers.

### (Examples 13 to 15 and Comparative Examples 7 and 8)

Gas barrier films according to Examples 13 to 15 and Comparative Examples 7 and 8 were obtained by the same procedure as in Example 1 or the like except that the oxygen barrier membrane was not formed.

A resin film used in each example is shown in Table 1.

### (Example 16)

A gas barrier film according to Example 16 was obtained by the same procedure as in Example 8 except that the oxygen barrier membrane was not formed.

The following items were evaluated using the gas barrier films of the examples and the comparative examples.

### (Measurement of probe descent temperature of base material)

Before the production of the gas barrier film, the probe descent temperature of each resin film was measured by the following guidelines.

As an atomic force microscope, MPF-3D-SA manufactured by Oxford Instruments was used, and, as a nano-thermal microscope provided in the above-described microscope, Ztherm manufactured by Oxford Instruments was used. As a cantilever, AN2-200 (trade name) manufactured by ANSYS, Inc. was used.

After the shape of a sample in a 10 µm visual field was measured in an AC mode, the cantilever was 5 to 10 µm away from the sample in a Z direction (the normal direction to the sample surface). In this state, a detrend correction function of the device was performed in a contact mode under conditions of a maximum application voltage of 6 V and a heating speed of 0.5 V/s, and a change in the deflection of the cantilever attributed to the application of the voltage was corrected.

After that, the cantilever was brought into contact with the sample in the contact mode so that a change in the deflection before and after the contact between the cantilever and the sample reached 0.2 V, and a voltage was applied to the cantilever under conditions of a maximum application voltage of 6 V and a heating speed of 0.5 V/s while the deflection was held at a certain value to heat the sample. The displacement of the cantilever at this time in the Z direction was recorded, and the measurement was stopped at a point in time where the Z displacement turned from ascent to descent and descended 50 nm from the change point. In a case where the maximum application voltage was reached without the Z displacement descending 50 nm from the change point, the maximum application voltages at the time of the detrend correction and at the time of the measurement were increased by 0.5 V, and the measurement was performed again. An application voltage at which the recorded Z displacement was maximized was converted to the temperature. This measurement was performed at 10 points in the 10 µm visual field, and the average value of the 10 points was regarded as the probe descent temperature.

Upon converting the application voltage to the temperature, a calibration curve was used. Polycaprolactone (melting point: 60°C), low-density polyethylene (melting point: 112°C), polypropylene (melting point: 166°C) and polyethylene terephthalate (melting point: 255°C) were measured as calibration samples, and calibration curves between the application voltage and the temperature were prepared. Here, the melting points are melting peak temperatures measured with a differential scanning calorimeter (DSC) under a condition of a temperature rising rate of 5 °C/minute. A method for measuring the calibration samples was the same as the measurement of the samples, but the maximum application voltages at the time of the detrend correction and at the time of the measurement were set to 3.5 V for polycaprolactone, 5.5 V for the low-density polyethylene, 6.5 V for the polypropylene and 7.8 V for the polyethylene terephthalate. A relationship of the melting point with respect to the application voltage at which the Z displacement was maximized at the time of measuring each calibration sample was approximated to a cubic function by the least squares method to produce a calibration curve, and the calibration curve was obtained.

### (Production of packaging material)

An LLDPE film (TUXMC-S manufactured by Mitsui Fine Chemicals, Inc., thickness: 60 µm), which was to be a heat seal layer, was attached to the surface of the gas barrier film of each example on which the inorganic oxide layer or the oxygen barrier membrane had been provided using an adhesive by dry lamination. After that, the film was cured at 40°C for three days, thereby producing a laminate according to each example.

As the adhesive, any of the followings was used.

Urethane-based adhesive: TAKELAC A525/TAKANATE A52 manufactured by Mitsui Chemicals, Polyurethane Inc.

Gas barrier adhesive: MAXIVE C93T/M-100 manufactured by Mitsubishi Gas Chemical Company, Inc.

An A5 size seal pouch was produced using the laminate of each example, filled with 150 ml of tap water as contents and sealed.

As a result, a packaging material according to each example was obtained.

The packaging material according to each example was boiled in hot water at 90°C for 30 minutes. The oxygen transmission rate and the lamination strength between the base material and the heat seal layer were measured before and after the boiling treatment.

### (Oxygen transmission rate)

The oxygen transmission rate of the laminate before and after the boiling treatment was measured using an oxygen transmission rate measuring instrument (OXTRAN-2/20 manufactured by AMETEK MOCON) under conditions of 30°C and 70%RH (relative humidity).

### (Lamination strength between base material and heat seal layer)

According to JIS Z 1707, a 15 mm-wide strip-like test piece was cut out from the laminate of each example, and the lamination strength between the base material and the heat seal layer was measured using a TENSILON universal testing instrument RTC-1250 manufactured by A&D Manufacturing Company, Limited. The following four conditions were set.
180° peeling normal ("Dry 180°" in Table 2)
T-type peeling normal ("Dry T" in Table 2)
180° peeling measurement portion wet ("Wet 180°" in Table 2)
T-type peeling measurement portion wet ("Wet T" in Table 2)
The results are shown in Table 1 and Table 2.

**[Table 1]**

| | Base material | | Undercoat layer | Inorganic oxide layer | Oxygen barrier membrane | Adhesive layer |
|---|---|---|---|---|---|---|
| | Kind | Probe descent temperature (°C) | | | | |
| Example 1 | α1 | 156 | Present | Silicon oxide | Organic inorganic composite membrane | Urethane-based |
| Example 2 | α2 | 152 | Present | Silicon oxide | Organic inorganic composite membrane | Urethane-based |
| Example 3 | α3 | 160 | Present | Silicon oxide | Organic inorganic composite membrane | Urethane-based |
| Example 4 | α4 | 164 | Present | Silicon oxide | Organic inorganic composite membrane | Urethane-based |
| Example 5 | α5 | 150 | Present | Silicon oxide | Organic inorganic composite membrane | Urethane-based |
| Example 6 | α3 | 160 | Absent | Silicon oxide | Organic inorganic composite membrane | Urethane-based |
| Example 7 | α1 | 156 | Present | Aluminum oxide | Polyvalent metal salt membrane of carboxylic acid | Urethane-based |
| Example 8 | α3 | 160 | Present | Aluminum oxide | Polyvalent metal salt membrane of carboxylic acid | Urethane-based |
| Example 9 | α4 | 164 | Present | Aluminum oxide | Polyvalent metal salt membrane of carboxylic acid | Urethane-based |
| Example 10 | α4 | 164 | Present | Absent | Polyvalent metal salt membrane of carboxylic acid | Urethane-based |
| Example 11 | α1 | 156 | Present | Silicon oxide | Organic inorganic composite membrane | Barrier adhesive |
| Example 12 | α2 | 152 | Present | Silicon oxide | Organic inorganic composite membrane | Barrier adhesive |
| Example 13 | α1 | 156 | Present | Silicon oxide | Absent | Barrier adhesive |
| Example 14 | α3 | 160 | Present | Silicon oxide | Absent | Barrier adhesive |
| Example 15 | α3 | 160 | Present | Silicon oxide | Absent | Urethane-based |
| Example 16 | α3 | 160 | Present | Aluminum oxide | Absent | Barrier adhesive |
| Comparative Example 1 | α6 | 211 | Present | Silicon oxide | Organic inorganic composite membrane | Urethane-based |
| Comparative Example 2 | α7 | 205 | Present | Silicon oxide | Organic inorganic composite membrane | Urethane-based |
| Comparative Example 3 | α8 | 201 | Present | Silicon oxide | Organic inorganic composite membrane | Urethane-based |
| Comparative Example 4 | α9 | 203 | Present | Silicon oxide | Organic inorganic composite membrane | Urethane-based |
| Comparative Example 5 | α6 | 211 | Present | Aluminum oxide | Polyvalent metal salt membrane of carboxylic acid | Urethane-based |
| Comparative Example 6 | α7 | 205 | Present | Aluminum oxide | Polyvalent metal salt membrane of carboxylic acid | Urethane-based |
| Comparative Example 7 | α7 | 205 | Present | Silicon oxide | Absent | Barrier adhesive |
| Comparative Example 8 | α7 | 205 | Present | Silicon oxide | Absent | Urethane-based |

**[Table 2]**

| | Oxygen transmission rate [cm³/(m²·day·atm)] | | Lamination strength [N/15 mm] | | | | | | | |
|---|---|---|---|---|---|---|---|---|---|---|
| | | | Before boiling | | | | After boiling | | | |
| | Before boiling | After boiling | Dry 180° | Dry T | Wet 180° | Wet T | Dry 180° | Dry T | Wet 180° | Wet T |
| Example 1 | 2.4 | 4.3 | 8.8 | 8.5 | 8.7 | 8.4 | 8.9 | 8.4 | 8.6 | 8.4 |
| Example 2 | 1.8 | 3.0 | 7.8 | 7.6 | 7.5 | 7.1 | 7.6 | 6.9 | 7.5 | 6.9 |
| Example 3 | 1.3 | 2.1 | 9.1 | 8.4 | 8.8 | 8.4 | 8.5 | 8.4 | 9.0 | 8.3 |
| Example 4 | 1.5 | 1.9 | 8.9 | 8.7 | 9.3 | 8.4 | 9.0 | 8.6 | 8.8 | 8.2 |
| Example 5 | 2.1 | 3.8 | 8.1 | 7.5 | 8.0 | 7.3 | 7.8 | 7.4 | 7.6 | 7.2 |
| Example 6 | 3.5 | 5.5 | 8.8 | 8.2 | 8.8 | 8.3 | 8.0 | 7.6 | 7.4 | 7.2 |
| Example 7 | 1.0 | 1.1 | 7.6 | 7.0 | 7.4 | 7.0 | 6.4 | 5.9 | 6.3 | 5.5 |
| Example 8 | 0.7 | 0.6 | 8.4 | 7.8 | 8.1 | 7.4 | 7.0 | 6.1 | 6.9 | 6.0 |
| Example 9 | 0.5 | 0.5 | 8.1 | 7.7 | 7.9 | 7.3 | 7.3 | 7.1 | 6.8 | 6.1 |
| Example 10 | 2.6 | 1.0 | 8.0 | 7.5 | 7.7 | 7.4 | 7.7 | 7.6 | 7.0 | 7.1 |
| Example 11 | 0.3 | 0.6 | 9.0 | 8.5 | 9.0 | 8.3 | 8.6 | 8.5 | 8.5 | 8.1 |
| Example 12 | 0.2 | 0.5 | 8.6 | 8.0 | 8.5 | 7.8 | 8.3 | 7.6 | 8.1 | 7.3 |
| Example 13 | 1.0 | 1.9 | 8.7 | 8.1 | 8.8 | 8.4 | 8.3 | 7.4 | 8.1 | 7.5 |
| Example 14 | 0.9 | 1.6 | 8.4 | 7.9 | 8.5 | 8.2 | 8.6 | 7.8 | 8.6 | 8.1 |
| Example 15 | 8.9 | 13.6 | 8.3 | 7.5 | 8.2 | 7.4 | 8.3 | 7.6 | 8.0 | 7.4 |
| Example 16 | 2.2 | 5.3 | 6.4 | 5.8 | 6.3 | 5.7 | 6.5 | 5.6 | 6.1 | 5.1 |
| Comparative Example 1 | 1.6 | 2.4 | 1.1 | 0.8 | 1.0 | 0.7 | 1.2 | 0.6 | 1.1 | 0.6 |
| Comparative Example 2 | 1.2 | 2.8 | 1.3 | 1.0 | 1.3 | 0.9 | 1.2 | 0.9 | 1.1 | 0.7 |
| Comparative Example 3 | 1.0 | 1.9 | 1.1 | 0.8 | 1.1 | 0.8 | 1.1 | 0.7 | 1.2 | 0.8 |
| Comparative Example 4 | 2.2 | 4.0 | 0.9 | 0.5 | 1.0 | 0.5 | 0.9 | 0.4 | 0.8 | 0.3 |
| Comparative Example 5 | 0.6 | 0.7 | 1.1 | 0.8 | 1.0 | 0.8 | 1.1 | 0.7 | 1.1 | 0.6 |
| Comparative Example 6 | 0.6 | 0.6 | 1.2 | 1.0 | 1.1 | 0.9 | 1.1 | 0.8 | 1.1 | 0.8 |
| Comparative Example 7 | 1.1 | 1.8 | 1.4 | 1.1 | 1.3 | 1.0 | 1.4 | 1.1 | 1.3 | 0.9 |
| Comparative Example 8 | 9.1 | 16.2 | 1.1 | 0.9 | 1.1 | 1.0 | 1.1 | 0.8 | 1.0 | 0.7 |

In all of the examples and the comparative examples, the content rates of polyethylene were 90 mass% or more and the recyclability was favorable in both of the gas barrier films and the laminates.

As shown in Table 1 and Table 2, in the examples, the probe descent temperatures of the base materials on the first surface side were 180°C or lower, and the lamination strengths between the base material and the heat seal layer were sufficient both before and after the boiling treatment regardless of the layer configurations between the base material and the heat seal layer. Particularly, in the examples, it is found that the probe descent temperatures were 150°C or higher and 180°C or lower and the lamination strengths were sufficient. The oxygen transmission rate in the examples slightly varied depending on the layer configurations between the base material and the heat seal layer or the adhesive layer, but it was possible to confirm that oxygen barrier properties were exhibited with no problems even after the boiling treatment.

On the other hand, the gas barrier films of the comparative examples did not have any problems regarding the oxygen barrier property, but the probe descent temperatures of all of the base materials were 180°C or higher, and the lamination strengths between the base material and the heat seal layer were less than 2 N/15 mm even before the boiling treatment, which were not sufficient. The lamination strengths exhibited a tendency of further decreasing after the boiling treatment.

What has been described showed that, in the gas barrier films and the laminates for which a polyethylene is used, when the probe descent temperature of the base material is made to be 180°C or lower, favorable recyclability attributed to mono-material packaging and a sufficient lamination strength between the base material and the heat seal layer can be both satisfied.

Hitherto, an embodiment and the examples of the present invention have been described, but the specific configuration is not limited to this embodiment and also includes the modification, combination or the like of configurations within the scope of the gist of the present invention.

### [Industrial Applicability]

The laminate of the present invention exhibits an excellent oxygen barrier property and exhibits a sufficient adhesion strength between the base material and the heat seal layer. In addition, since the proportion of the polyethylene is 90 mass% or more, the laminate has high recyclability as a polyethylene material.

The laminate of the present invention can be suitably used as a variety of packaging materials. In particular, the laminate is suitable for boiled packaging materials and is capable of maintaining the quality of the contents for a long period of time.

The gas barrier film of the present invention exhibits an excellent oxygen barrier property and exhibits a sufficient adhesion strength at the time of joining a heat seal layer.

The laminate and the gas barrier film of the present invention can also be used for uses other than packaging materials. As the uses other than packaging materials, electron device-related films, solar cell films, a variety of functional films for fuel cells, substrate films and the like are exemplary examples.

### [Reference Signs List]

1 Laminate
10 Gas barrier film
11 Base material
11a First surface
13 Inorganic oxide layer
14 Oxygen barrier membrane
20 Adhesive layer
30 Heat seal layer

## Claims

1. A gas barrier film comprising:
a base material containing a polyethylene as a main resin component; and
an inorganic oxide layer or an oxygen barrier membrane formed on a first surface side of the base material,
wherein a probe descent temperature of the base material on the first surface side is 180°C or lower, and
a proportion of the polyethylene in the entire gas barrier film is 90 mass% or more.

2. The gas barrier film according to Claim 1,
wherein the polyethylene has a density of 0.94 g/cm³ or higher.

3. The gas barrier film according to Claim 1 or 2,
wherein the base material is an unstretched film containing a polyethylene as a main resin component.

4. The gas barrier film according to Claim 1,
wherein the inorganic oxide layer is provided on the first surface side, and the inorganic oxide layer is made of aluminum oxide or silicon oxide.

5. The gas barrier film according to Claim 1,
wherein the oxygen barrier membrane is provided on the first surface side, and
the oxygen barrier membrane contains at least one of a metal alkoxide, a hydrolyzate of a metal alkoxide, a reaction product of a metal alkoxide and a reaction product of a hydrolyzate of a metal alkoxide, and a water-soluble polymer.

6. The gas barrier film according to Claim 5,
wherein the oxygen barrier membrane contains at least one of a silane coupling agent, a hydrolyzate of a silane coupling agent, a reaction product of a silane coupling agent and a reaction product of a hydrolyzate of a silane coupling agent.

7. The gas barrier film according to Claim 1,
wherein the oxygen barrier membrane is provided on the first surface side, and
the oxygen barrier membrane contains a polyvalent metal salt of a carboxylic acid.

8. The gas barrier film according to any one of Claims 1 to 7,
wherein an oxygen barrier membrane containing water-swellable synthetic mica is not provided.

9. A laminate comprising:
the gas barrier film according to any one of Claims 1 to 8; and
a heat seal layer containing a polyethylene as a main resin component and being joined to the gas barrier film such that the inorganic oxide layer or the oxygen barrier membrane is sandwiched between the base material and the heat seal layer,
wherein a proportion of the polyethylene in the entire laminate is 90 mass% or more.

10. The laminate according to Claim 9,
wherein the gas barrier film and the heat seal layer are joined together through an adhesive layer.

11. The laminate according to Claim 10,
wherein the adhesive layer is made of a gas barrier adhesive.

12. A packaging material formed using the laminate according to any one of Claims 9 to 11.
